# EUROPÄISCHE PATENTSCHRIFT

(11) **EP 0 917 851 B1**
(45) Veröffentlichungstag und Bekanntmachung des Hinweises auf die Patenterteilung: **15.11.2006**
(21) Anmeldenummer: 98122297.9
(22) Anmeldetag: 24.11.1998
(51) Int. Cl.: A47L 9/24

(54) **Saugschlauch für einen Staubsauger**
Suction hose for a vacuum cleaner
Tuyau flexible d'aspiration pour aspirateur de poussières

(30) Priorität: 24.11.1997 DE 19752008
(43) Veröffentlichungstag der Anmeldung: 26.05.1999
(73) Patentinhaber: BSH Bosch und Siemens Hausgeräte GmbH, 81739 München (DE)
(72) Erfinder: Drechsler, Helmut Dipl.-Ing. (FH), 97616 Bad Neustadt (DE); Schröter, Jörg, 85609 Aschheim (DE)

(56) Entgegenhaltungen:
- GB-A- 739 412
- US-A- 2 739 616
- US-A- 3 043 585

## Beschreibung

Die Erfindung betrifft einen Saugschlauch für einen Staubsauger , bei welchem Saugschlauch in dessen gewellt ausgebildeter Schlauchwand eine den Saugschlauch selbsttätig zusammenziehende Federwendel eingebettet ist.

Derartige Saugschläuche sind bei auf dem Markt befindlichen Staubsaugern bekannt. Solche Saugschläuche ziehen sich im Ruhezustand des Staubsaugers zusammen, so daß für das Verstauen des Staubsaugers nach durchgeführten Saugarbeiten wesentlich weniger Platz beansprucht wird. Desgleichen wird das Verstauen selbst durch den in seiner Länge wesentlich verkürzten Saugschlauch erleichtert.

Aus der US 2,739,616 ist beispielsweise ein Saugschlauch bekannt, mit einer gewellt ausgebildeten Schlauchwand, in die eine den Saugschlauch selbsttätig zusammenziehende Federwendel eingebettet ist, die in zum Innern des Saugschlauches weisenden Wellentälern der Schlauchwand angeordnet ist.

Nachteilig bei derartigen sich selbst verkürzenden Saugschläuchen, die auch als Stretchschläuche bezeichnet werden, ist das bei der Durchführung von Saugarbeiten infolge von Druckschwankungen auftretende ruckartige Zusammenziehen. Bei periodisch auftretenden Druckschwankungen kommt es zu einem Schlagen des Saugschlauches, wodurch ein unerwünschter Lärm erzeugt wird.

Der Erfindung liegt die Aufgabe zugrunde, einen Saugschlauch der eingangs beschriebenen Art so auszubilden, daß ein ruckartiges Zusammenziehen des Saugschlauches bei Druckänderungen möglichst vermieden oder zumindest stark gedämpft wird.

Die Lösung der gestellten Aufgabe gelingt nach der Erfindung dadurch, daß die Schlauchwand Flanken aufweist, die sich zwischen den Wellentälern und den Wellenbergen erstrecken.

Durch eine solche Anordnung der Federwendel wird erreicht, daß der während des Saugbetriebes auf die Außenwand des Saugschlauches wirkende Umgebungsdruck wegen des im Innern des Saugschlauches herrschenden Unterdruckes eine Kraftkomponente erzeugt, die den Saugschlauch zu verlängern versucht, somit also der den Saugschlauch verkürzenden Kraft der Federwendel entgegen wirkt. Dies führt entweder zu einer starken Dämpfung der von der Federwendel auf den Saugschlauch ausgeübten Verkürzungskraft oder gegebenenfalls sogar zu einer vollständigen Kompensation dieser Verkürzungskraft.

Von Vorteil ist es ferner, wenn die nach außen weisenden Wellenberge der Schlauchwand in ihrem Scheitelpunkt besonders dehnfähig ausgebildet sind. Damit erhöht sich die der Verkürzungskraft der Federwendel entgegenwirkende, durch den zwischen dem Innen- und Außenraum des Saugschlauches bestehenden Druckunterschied hervorgerufene Kraft, da von dieser Kraft weniger Verformungsarbeit am Saugschlauch geleistet werden muß.

Eine hohe Elastizität wird im Scheitelpunkt der Wellenberge dadurch erreicht, daß der Scheitelpunkt wulstartig nach außen gewölbt ausgebildet ist. Für das Aufbiegen einer solchen Wölbung ist nur ein geringer Kraftaufwand erforderlich.

Anhand eines in der Zeichnung dargestellten Ausführungsbeispieles wird die Erfindung nachfolgend noch näher erläutert.

Es zeigt:
- FIG 1: ein Teilstück eines mit einer Federwendel versehenen Saugschlauches,
- FIG 2: die im Saugbetrieb auf den Saugschlauch wirkenden Kräfte.

Mit 1 ist ein sich selbst verkürzender Saugschlauch (Stretchschlauch) bezeichnet. Dieser Saugschlauch 1 weist eine gewellt ausgebildete Schlauchwand 2 auf. Im Bereich der zum Innern des Saugschlauches 1 weisenden Wellentäler 3 ist in das Material der Schlauchwand 2 eine sich zusammenziehende Federwendel 4 eingebettet. Diese Federwendel 4 versucht den Saugschlauch 1 ständig zusammenzuziehen. Die nach außen weisenden Wellenberge 5 der Schlauchwand 2 sind in ihrem Scheitelpunkt 6 wulstartig nach außen gewölbt ausgebildet. Durch diese wulstartige Ausbildung wird eine bessere Beweglichkeit der sich zwischen den Wellentälern 3 und den Wellenbergen 5 erstreckenden Flanken 7 erzielt.

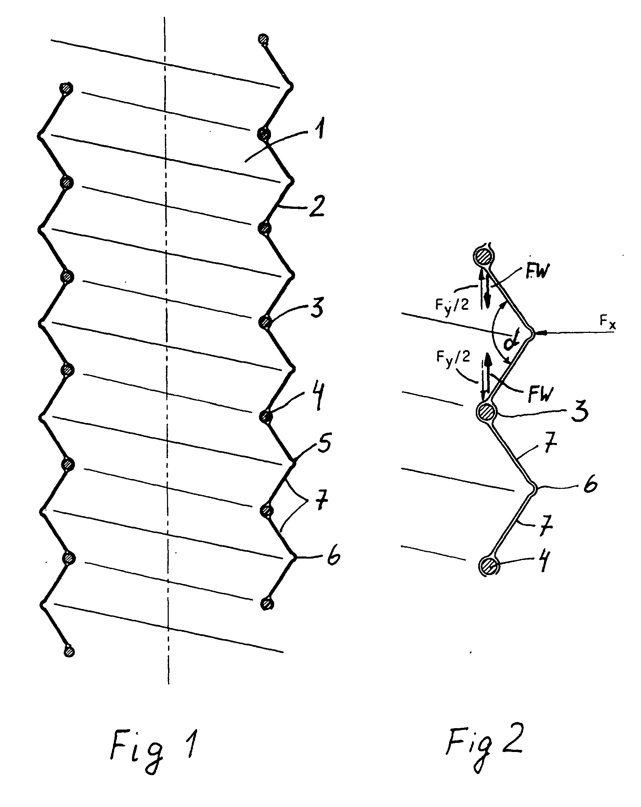

Wie aus Fig. 2 ersichtlich, versucht die Kraft FW der Federwendel 4 den Saugschlauch 1 zusammenzuziehen. Dies ist im Ruhezustand des Saugschlauches 1 auch erwünscht, da der Saugschlauch 1 dann auf eine minimale Länge verkürzt wird und daher mit dem Staubsauger zusammen besser verstaut werden kann.

Während des Saugbetriebes wird der an ein mit einem Saugmundstück verbundenen Saugrohr angekoppelte Saugschlauch 1 beim Hin- und Herbewegen des Saugrohres entsprechend gedehnt bzw. durch die Federwendel 4 wieder ein Stück zusammengezogen. Da im Saugbetrieb im Innem des Saugschlauches 1 ein Unterdruck herrscht, wird durch den an der Außenseite des Saugschlauches 1 wirkenden höheren Umgebungsdruck eine zum Inneren des Saugschlauches 1 gerichtete Kraft Fx auf den Saugschlauch 1 ausgeübt. Diese Kraft Fx zerlegt sich in die der Kraft FW der Federwendel 4 entgegenwirkenden Kraftkomponenten Fy/2. Durch diese Kraftkomponenten Fy/2 wird somit während des Saugbetriebes die das Zusammenziehen des Saugschlauches 1 bewirkende Kraft FW der Federwendel 4 entsprechend gemindert, wodurch ein ruckartiges Zusammenziehen des Saugschlauches 1 vermieden wird.

Mit einem verstärkten Auseinanderziehen des Saugschlauches 1 steigt die das Zusammenziehen des Saugschlauches 1 verursachende Kraft FW der Federwendel 4, wegen deren stärkeren Dehnung an. Infolge des sich beim Auseinanderziehen des Saugschlauches 1 zwischen den Flanken 7 vergrößernden Winkels α wachsen auch die Kraftkomponenten Fy/2 der vom Umgebungsdruck auf den Saugschlauch 1 ausgeübten Kraft Fx. Damit wird über den gesamten Dehnungsbereich des Saugschlauches 1 eine gute Dämpfung der von der Federwendel 4 auf den Saugschlauch 1 ausgeübten Kraft FW erreicht.

## Patentansprüche

1. Saugschlauch (1) für einen Staubsauger, mit einer gewellt ausgebildeten Schlauchwand (2), in die eine den Saugschlauch (1) selbsttätig zusammenziehende Federwendel (4) eingebettet ist, die in zum Innern des Saugschlauches (1) weisenden Wellentälern (3) der Schlauchwand (2) angeordnet ist,
**dadurch gekennzeichnet, dass** die Schlauchwand (2) sich zwischen den Wellentälern (3) und Wellenbergen (5) erstreckende Flanken (7) aufweist.

2. Saugschlauch nach Anspruch 1, **dadurch gekennzeichnet, dass** die nach außen weisenden Wellenberge (5) der Schlauchwand (2) in ihrem Scheitelpunkt (6) eine höhere Elastizität aufweise, als die Flanken (7).

3. Saugschlauch nach Anspruch 2, **dadurch gekennzeichnet, dass** der Scheitelpunkt (6) der nach außen weisenden Wellenberge (5) wulstartig nach außen gewölbt ausgebildet ist.

4. Saugschlauch nach Anspruch 2 oder 3, **dadurch gekennzeichnet, dass** die Flanken (7) in ihrem Querschnitt gerade ausgebildet sind.

## Claims

1. Suction hose (1) for a vacuum cleaner, with a hose wall (2), which is of waved construction and in which a spring coil (4) automatically drawing the suction hose (1) together is embedded, the spring coil being arranged in wave valleys (3), which face the interior of the suction hose (1), of the hose wall (2), **characterised in that** the hose wall (2) has flanks (7) extending between the wave valleys (3) and wave crests (5).

2. Suction hose according to claim 1, **characterised in that** the outwardly facing wave crests (5) of the hose wall (2) have at the crest point (6) thereof a higher elasticity than the flanks (7).

3. Suction hose according to claim 2, **characterised in that** the crest point (6) of the outwardly facing wave crests (5) is formed to be bowed outwardly in bead-like manner.

4. Suction hose according to claim 2 or 3, **characterised in that** the flanks (7) are constructed to be straight in the cross-section thereof.

## Revendications

1. Tuyau flexible d'aspiration (1) pour un aspirateur de poussières, comprenant une paroi de tuyau (2) formée de manière ondulée, dans laquelle est logée une spirale élastique (4) rétractant automatiquement le tuyau flexible d'aspiration (1), la spirale élastique étant disposée dans des creux (3) de la paroi de tuyau (2), orientés vers l'intérieur du tuyau flexible d'aspiration (1),
**caractérisé en ce que** la paroi de tuyau (2) présente des flancs (7) s'étendant entre les creux (3) et des crêtes (5).

2. Tuyau flexible d'aspiration selon la revendication 1, **caractérisé en ce que** les crêtes (5) de la paroi de tuyau (2), orientées vers l'extérieur, présentent à leur sommet (6) une élasticité plus élevée que les flancs (7).

3. Tuyau flexible d'aspiration selon la revendication 2, **caractérisé en ce que** le sommet (6) des crêtes (5) orientées vers l'extérieur est exécuté en forme de bourrelet bombé vers l'extérieur.

4. Tuyau flexible d'aspiration selon la revendication 2 ou 3, **caractérisé en ce que** les flancs (7) sont exécutés de manière rectiligne dans leur section transversale.
